# EUROPEAN PATENT APPLICATION

(11) **EP 2 980 449 A1**
(43) Date of publication of application: **03.02.2016**
(21) Application number: 14774541.8
(22) Date of filing: 29.01.2014
(51) Int. Cl.: F16H 3/083

(54) **OIL PUMP-DRIVING APPARATUS**

(30) Priority: 25.03.2013 JP 2013062498
(71) Applicant: Jatco Ltd, Fuji-shi, Shizuoka 417-8585 (JP)
(72) Inventor: YOSHIDA, Koji, Fuji-shi Shizuoka 417-8585 (JP); YOKOTE, Tatsuo, Fuji-shi Shizuoka 417-8585 (JP)
(74) Representative: Hoefer & Partner Patentanwälte mbB
(86) International application number: PCT/JP2014/051912
(87) International publication number: WO 2014/156280

(57) **Abstract**

An oil pump driving device drives an oil pump using at least one of rotation generated by an electric motor and rotation generated by an engine. The oil pump driving device includes: a first transmission unit to which the rotation generated by the electric motor is transmitted; a second transmission unit to which the rotation generated by the engine is transmitted; a third transmission unit configured to transmit rotation to the oil pump; and an engaging unit configured to cause the third transmission unit to engage with the first transmission unit, with the second transmission unit, or with the first and second transmission units.

## Description

### TECHNICAL FIELD

The present invention relates to an oil pump driving device.

### BACKGROUND ART

JP 2001-289315A discloses a conventional technique to drive one oil pump by transmitting, to the oil pump, rotation generated by an engine and an electric motor using a planetary gear mechanism.

### SUMMARY OF INVENTION

However, with the foregoing technique, the oil pump is always connected to the engine and the electric motor. Even when the oil pump can be driven using only the electric motor, the engine and the oil pump are not disconnected from each other, and rotation generated by the engine is always transmitted to the oil pump. Therefore, the engine drives the oil pump even when the engine does not need to drive the oil pump. This leaves room for improvement in the fuel economy of the engine.

The present invention has been conceived to solve the foregoing problem. It is an object of the present invention to improve the fuel economy of an engine by disconnecting the engine and an oil pump from each other when the oil pump is driven by an electric motor.

An oil pump driving device according to an aspect of the present invention is an oil pump driving device for driving an oil pump using at least one of rotation generated by an electric motor and rotation generated by an engine, the oil pump driving device comprising: a first transmission unit, the rotation generated by the electric motor being transmitted to the first transmission unit; a second transmission unit, the rotation generated by the engine being transmitted to the second transmission unit; a third transmission unit configured to transmit rotation to the oil pump; and engaging means configured to cause the third transmission unit to engage with the first transmission unit, with the second transmission unit, or with the first and second transmission units.

According to this aspect, the third transmission unit transmitting rotation to the oil pump and the second transmission unit to which rotation generated by the engine is transmitted can be disengaged, and the first transmission unit to which rotation generated by the motor is transmitted can be engaged to only the third transmission unit. Thereby, the fuel economy of the engine can be improved.

### BRIEF DESCRIPTION OF DRAWINGS

Fig. 1 is a schematic cross-sectional view of an oil pump driving device according to an embodiment of the present invention.
Fig. 2 is an enlarged schematic view of a part of the oil pump driving device.
Fig. 3 shows a case in which an oil pump is driven using only an electric motor.
Fig. 4A is an explanatory diagram showing a method of engagement between a second synchronization gear and a hub.
Fig. 4B is an explanatory diagram showing the method of engagement between the second synchronization gear and the hub.
Fig. 4C is an explanatory diagram showing the method of engagement between the second synchronization gear and the hub.
Fig. 5 shows a case in which the oil pump is driven using only an engine.
Fig. 6 shows a case in which the oil pump is driven using the electric motor and the engine.

### DESCRIPTION OF EMBODIMENTS

The following describes an embodiment of the present invention with reference to the attached drawings.

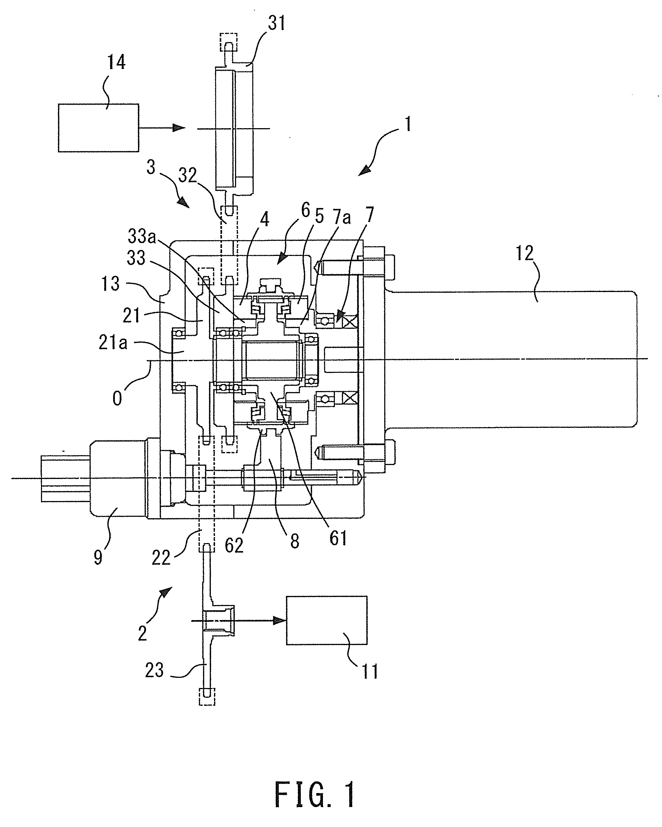

A description is now given of an oil pump driving device according to an embodiment of the present invention with reference to Fig. 1. Fig. 1 is a schematic cross-sectional view of the oil pump driving device. In the following description, the oil pump driving device according to the present embodiment is mounted on a vehicle.

An oil pump driving device 1 includes a rotation output unit 2, an engine rotation input unit 3, a second synchronization gear 4, a first synchronization gear 5, a synchromesh mechanism 6, a motor rotation input unit 7, a shift fork 8, and an actuator 9.

The rotation output unit 2 includes a first input sprocket 21, a first chain 22, and a first output sprocket 23.

The first input sprocket 21 is arranged so as to share the same rotation axis O with an electric motor 12, and includes a shaft part 21a extending along the rotation axis O. The shaft part 21 a is rotatably supported by a case 13 at one end portion thereof, and by the motor rotation input unit 7 at the other end portion thereof. Splines are formed on an outer circumferential wall of the shaft part 21a on the electric motor 12 side such that they mate with splines formed on a hub 61 of the synchromesh mechanism 6. Accordingly, the first input sprocket 21 and the hub 61 rotate integrally.

The first output sprocket 23 is joined to a driving shaft of an oil pump 11 via a joining member, and transmits, to the oil pump 11, rotation transmitted via the first input sprocket 21 and the first chain 22.

The engine rotation input unit 3 includes a second input sprocket 31, a second chain 32, and a second output sprocket 33.

Rotation generated by an engine 14 is transmitted to the second input sprocket 31. The second input sprocket 31 transmits the rotation generated by the engine 14 to the second output sprocket 33 via the second chain 32.

The second output sprocket 33 shares the rotation axis O. The shaft part 21a of the first input sprocket 21 penetrates through the second output sprocket 33, and the second output sprocket 33 is rotatably supported by the shaft part 21a of the first input sprocket 21. The second output sprocket 33 has a second output sprocket hollow cylinder 33a extending from a radially inner sidewall toward the electric motor 12 along the rotation axis O. Splines are formed on an outer circumferential wall of the second output sprocket hollow cylinder 33a such that they mate with splines formed on an inner circumferential wall of the second synchronization gear 4. Accordingly, the second output sprocket 33 and the second synchronization gear 4 rotate integrally.

The second synchronization gear 4 shares the rotation axis O. Splines are formed on the inner circumferential wall of the second synchronization gear 4 such that they mate with the splines formed on the second output sprocket hollow cylinder 33a. Also, splines are formed on an outer circumferential wall of the second synchronization gear 4 such that they can mate with splines formed on a sleeve 62 of the synchromesh mechanism 6.

The motor rotation input unit 7 shares the rotation axis O. A main shaft of the electric motor 12 mates with the motor rotation input unit 7, and the motor rotation input unit 7 is rotatably supported by the case 13. The motor rotation input unit 7 has a hollow cylinder 7a extending toward the first input sprocket 21 along the rotation axis O. The shaft part 21a of the first input sprocket 21 is inserted into and rotatably supported by the hollow cylinder 7a. Splines are formed on an outer circumferential wall of the hollow cylinder 7a such that they mate with splines formed on an inner circumferential wall of the first synchronization gear 5. Accordingly, the motor rotation input unit 7 and the first synchronization gear 5 rotate integrally.

Splines are formed on the inner circumferential wall of the first synchronization gear 5 such that they mate with the splines formed on the hollow cylinder 7a of the motor rotation input unit 7. Also, splines are formed on an outer circumferential wall of the first synchronization gear 5 such that they can mate with the splines formed on the sleeve 62 of the synchromesh mechanism 6.

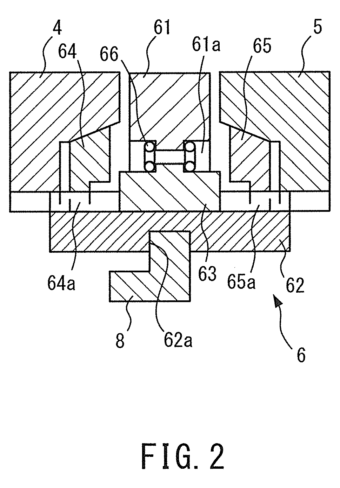

The synchromesh mechanism 6 will now be described with reference to Figs. 1 and 2. Fig. 2 is a schematic view of a part of the synchromesh mechanism 6.

The synchromesh mechanism 6 is interposed between the second synchronization gear 4 and the first synchronization gear 5, and shares the rotation axis O. The synchromesh mechanism 6 includes the hub 61, the sleeve 62, synchronization keys 63, a second synchronizer ring 64, and a first synchronizer ring 65. The synchromesh mechanism 6 causes the first input sprocket 21 to engage with at least one of the second synchronization gear 4 and the first synchronization gear 5, and transmits at least one of rotation generated by the engine 14 and rotation generated by the electric motor 12 to the oil pump 11.

The shaft part 21a of the first input sprocket 21 penetrates through the hub 61. Splines are formed on an inner circumferential wall of the hub 61 such that they mate with the splines formed on the shaft part 21a of the first input sprocket 21. Also, splines are formed on an outer circumferential wall of the hub 61 such that they mate with the splines on the sleeve 62. Accordingly, the hub 61 and the sleeve 62 rotate integrally. A plurality of cutouts 61a extending in an axial direction are formed on an outer circumferential side of the hub 61. Each cutout 61a is provided with a synchronization key 63.

Each synchronization key 63 is joined to the hub 61 via a spring 66, and is in contact with an inner circumferential wall of the sleeve 62 as it is pushed radially outward by the spring 66. When the sleeve 62 moves in the direction of the rotation axis O via the shift fork 8, the synchronization keys 63 move in the direction of the rotation axis O, together with the sleeve 62, due to a friction force generated between the synchronization keys 63 and the sleeve 62. When the sleeve 62 causes the hub 61 (first input sprocket 21) to engage with the second synchronization gear 4 or the first synchronization gear 5 by moving in the direction of the rotation axis O, the synchronization keys 63 come into contact with the second synchronizer ring 64 or the first synchronizer ring 65, thereby reducing a rotational speed difference between the hub 61 and the second synchronization gear 4 or the first synchronization gear 5.

The sleeve 62 has a shape of a hollow cylinder. Splines are formed on the inner circumferential wall of the sleeve 62, and a groove 62a is formed on an outer circumferential wall of the sleeve 62 along a circumferential direction. The shift fork 8 engages with the groove 62a such that the sleeve 62 is rotatable on the shift fork 8. When the shift fork 8 moves in the direction of the rotation axis O, the sleeve 62 moves in the direction of the rotation axis O in harmony with the movement of the shift fork 8. The splines formed on the inner circumferential wall of the sleeve 62 always mate with the splines formed on the outer circumferential wall of the hub 61, and also mate with the splines formed on the outer circumferential wall of the second synchronization gear 4 and/or the splines formed on the outer circumferential wall of the first synchronization gear 5 in accordance with the movement of the shift fork 8. That is to say, the sleeve 62 causes the hub 61 to engage with at least one of the second synchronization gear 4 and the first synchronization gear 5, and also causes the hub 61 (first input sprocket 21) to rotate in synchronization with at least one of the second synchronization gear 4 and the first synchronization gear 5.

The second synchronizer ring 64 is interposed between the hub 61 and the second synchronization gear 4. A radially inner side of the second synchronizer ring 64 comes into contact with the second synchronization gear 4. The second synchronizer ring 64 has a plurality of chamfers 64a. When the sleeve 62 causes the hub 61 to engage with the second synchronization gear 4, the second synchronizer ring 64, together with the synchronization keys 63, reduces the rotational speed difference between the hub 61 and the second synchronization gear 4, thereby facilitating mating of the splines formed on the sleeve 62 with the splines formed on the outer circumferential wall of the second synchronization gear 4.

The first synchronizer ring 65 is interposed between the hub 61 and the first synchronization gear 5. A radially inner side of the first synchronizer ring 65 comes into contact with the first synchronization gear 5. The first synchronizer ring 65 has a plurality of chamfers 65a. When the sleeve 62 causes the hub 61 to engage with the first synchronization gear 5, the first synchronizer ring 65 facilitates mating of the splines formed on the sleeve 62 with the splines formed on the outer circumferential wall of the first synchronization gear 5, similarly to the second synchronizer ring 64.

The actuator 9 causes the sleeve 62 to move in the axial direction via the shift fork 8. The actuator 9 is, for example, a solenoid.

The operations according to the present embodiment will now be described.

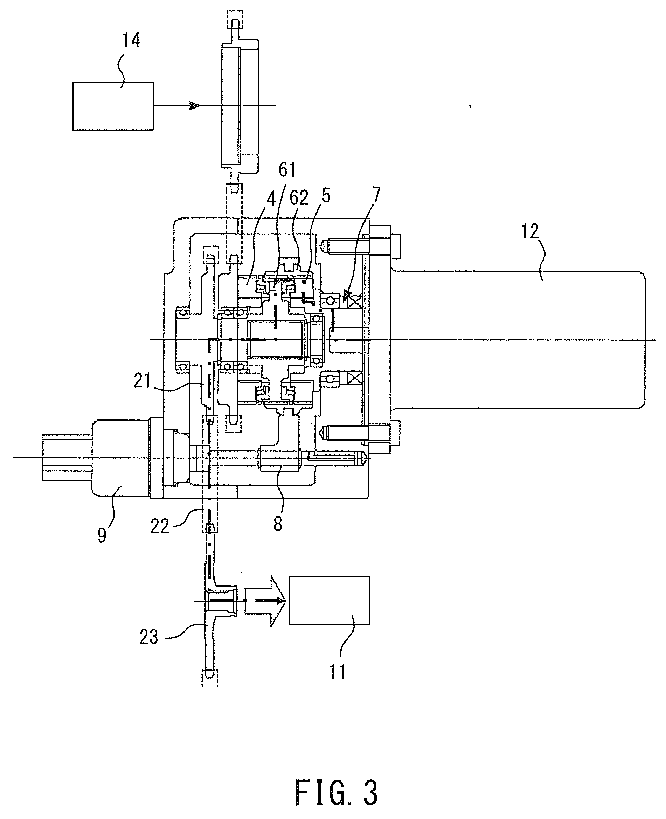

When driving the oil pump 11 using only the electric motor 12, the shift fork 8 is moved toward the electric motor 12 using the actuator 9, and the sleeve 62 causes the first synchronization gear 5 and the hub 61 to engage with each other, as shown in Fig. 3. Consequently, the first synchronization gear 5 and the hub 61 (first input sprocket 21) rotate in synchronization with each other. Rotation generated by the electric motor 12 is transmitted to the motor rotation input unit 7, the first synchronization gear 5, the sleeve 62, the hub 61, the first input sprocket 21, the first chain 22, and the first output sprocket 23 in the stated order, and then transmitted to the oil pump 11. The oil pump 11 is driven using only the electric motor 12, for example, during idling stop control for automatically stopping the engine 14, and when the vehicle is running at a high speed or a constant speed.

When driving the oil pump 11 using only the electric motor 12 in the above-described manner, the sleeve 62 leaves the second synchronization gear 4 and the hub 61 disengaged from each other. Therefore, when the engine 14 is driven, rotation generated by the engine 14 is not transmitted to the hub 61.

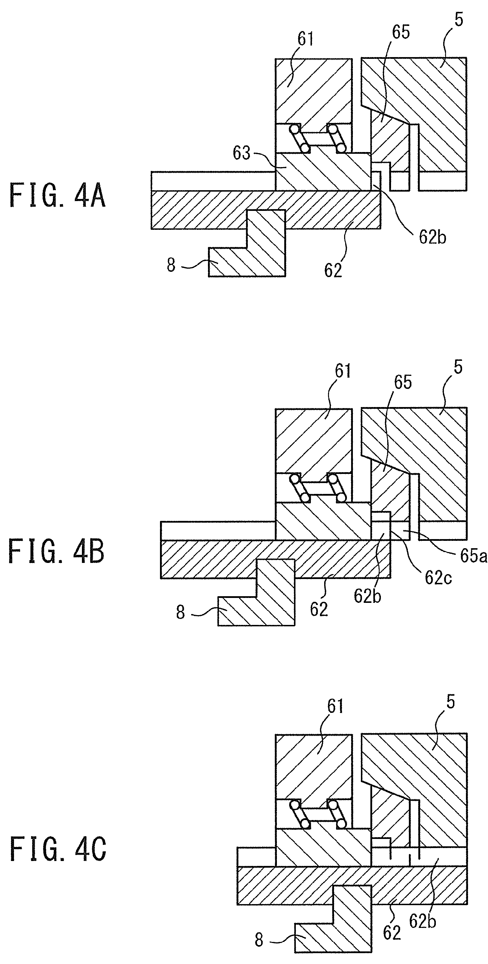

A method of engagement between the first synchronization gear 5 and the hub 61 will now be described in detail with reference to Figs. 4A to 4C. For the sake of explanation, the second synchronization gear 4 is omitted in Figs. 4A to 4C.

When the shift fork 8 moves toward the first synchronization gear 5 (electric motor 12) in a state where the first synchronization gear 5 and the hub 61 are disengaged from each other, the sleeve 62 and the synchronization keys 63 move toward the first synchronization gear 5 together with the shift fork 8, and the synchronization keys 63 come into contact with the first synchronizer ring 65 (Fig. 4A). Consequently, a friction force is generated between the synchronization keys 63 that rotate together with the sleeve 62 and the first synchronizer ring 65, and also between the first synchronizer ring 65 and the first synchronization gear 5. Accordingly, the first synchronization gear 5 rotates, and the rotational speed difference between the hub 61 and the first synchronization gear 5 is reduced. It should be noted that splines 62b formed on the sleeve 62 are not in contact with the first synchronizer ring 65, and the friction force between the first synchronizer ring 65 and the first synchronization gear 5 is relatively small.

When the sleeve 62 moves further toward the first synchronization gear 5 together with the shift fork 8, a tip part 62c of the splines 62b formed on the inner circumferential wall of the sleeve 62 comes into contact with the chamfers 65a provided on an outer circumferential wall of the first synchronizer ring 65 (Fig. 4B). As the sleeve 62 comes into direct contact with the first synchronizer ring 65, the friction force between the first synchronizer ring 65 and the first synchronization gear 5 increases, the rotational speed difference between the hub 61 and the first synchronization gear 5 is further reduced, and the hub 61 and the first synchronization gear 5 eventually rotate in synchronization with each other. When the hub 61 and the first synchronization gear 5 rotate in synchronization with each other, the splines 62b push away the chamfers 65a in the circumferential direction, thereby enabling the sleeve 62 to move further toward the first synchronization gear 5.

When the sleeve 62 moves further toward the first synchronization gear 5 together with the shift fork 8, the splines 62b formed on the inner circumferential wall of the sleeve 62 mate with the splines formed on the outer circumferential wall of the first synchronization gear 5 (Fig. 4C). As the hub 61 (sleeve 62) and the first synchronization gear 5 are rotating in synchronization with each other, the splines 62b formed on the inner circumferential wall of the sleeve 62 easily mate with the splines formed on the outer circumferential wall of the first synchronization gear 5. In the above-described manner, the use of the synchromesh mechanism 6 facilitates engagement between the hub 61 and the first synchronization gear 5.

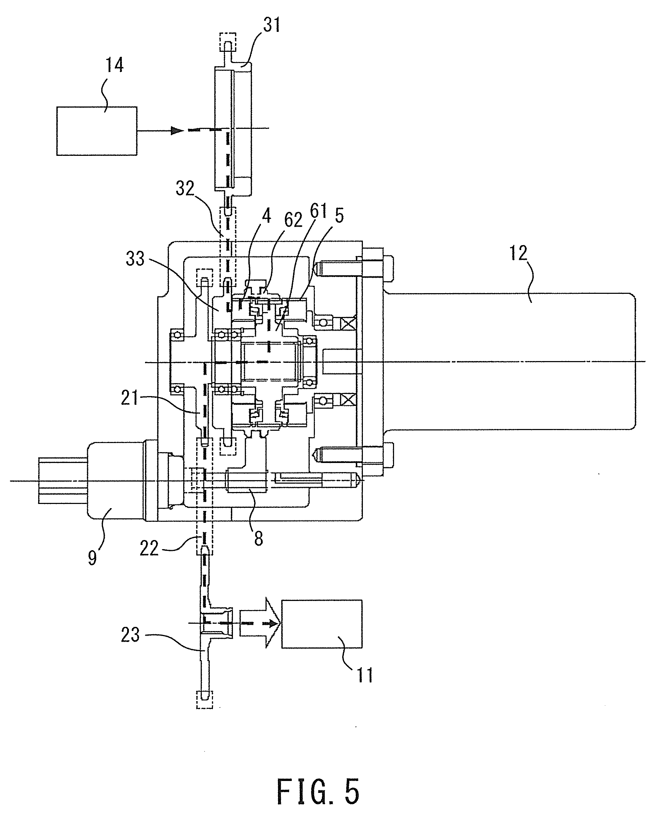

When driving the oil pump 11 using only the engine 14, the shift fork 8 is moved toward the first input sprocket 21 using the actuator 9, and the sleeve 62 causes the second synchronization gear 4 and the hub 61 to engage with each other, as shown in Fig. 5.

Rotation generated by the engine 14 is transmitted to the second input sprocket 31, the second chain 32, the second output sprocket 33, the second synchronization gear 4, the sleeve 62, the hub 61, the first input sprocket 21, the first chain 22, and the first output sprocket 23 in the stated order, and then transmitted to the oil pump 11. The oil pump 11 is driven using only the engine 14, for example, when driving in an urban area. It should be noted that the sleeve 62 leaves the first synchronization gear 5 and the hub 61 disengaged from each other.

When the sleeve 62 causes the second synchronization gear 4 and the hub 61 to engage with each other, the second synchronization gear 4 and the hub 61 can easily engage with each other in a manner similar to the engagement between the first synchronization gear 5 and the hub 61.

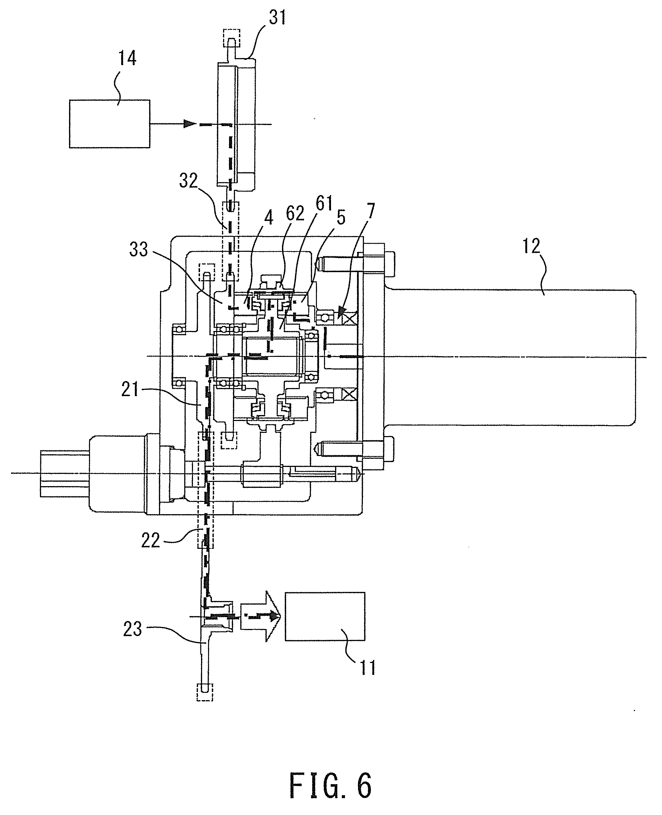

In order to drive the oil pump 11 using the electric motor 12 and the engine 14, the sleeve 62 causes the hub 61 to engage with the second synchronization gear 4 and the first synchronization gear 5 as shown in Fig. 6. The oil pump 11 is driven using the electric motor 12 and the engine 14, for example, when driving on a climbing road and when accelerating the vehicle.

Rotation generated by the engine 14 is transmitted to the second input sprocket 31, the second chain 32, the second output sprocket 33, the second synchronization gear 4, and the hub 61. Rotation generated by the electric motor 12 is transmitted to the motor rotation input unit 7, the first synchronization gear 5, and the hub 61. Thereafter, rotation is transmitted to the first input sprocket 21, the first chain 22, and the first output sprocket 23 in the stated order, and then transmitted to the oil pump 11.

The advantageous effects of the embodiment of the present invention will now be described.

When driving the oil pump 11 using only the electric motor 12, the second synchronization gear 4 and the hub 61 are disengaged from each other, and hence the oil pump 11 and the engine 14 are disconnected from each other. In this way, the load on the engine 14 can be reduced, and the fuel economy of the engine 14 can be improved.

When driving the oil pump 11 using only the engine 14, the first synchronization gear 5 and the hub 61 are disengaged from each other. When the first synchronization gear 5 and the hub 61 are in engagement with each other without the electric motor 12 being driven, the engine 14 needs to rotate a driving shaft (rotor) of the electric motor 12 in addition to the oil pump 11. This increases the load on the engine 14 and lowers the fuel economy. In such a case, the present embodiment makes it possible to prevent lowering of the fuel economy of the engine 14 because the first synchronization gear 5 and the hub 61 are disengaged from each other.

The sleeve 62 can also cause the hub 61 to engage with the second synchronization gear 4 and the first synchronization gear 5 so as to drive the oil pump 11 using rotation generated by the engine 14 and rotation generated by the electric motor 12. Consequently, for example, when driving on a climbing road and when accelerating the vehicle, rotation generated by the electric motor 12 is transmitted to the oil pump 11. In this way, the electric motor 12 assists driving of the oil pump 11, and rotation generated by the engine 14 can be used for driving of the vehicle. Accordingly, the driving performance of the vehicle can be improved.

When driving the oil pump 11 using the electric motor 12, the sleeve 62 causes the hub 61, which mates with the first input sprocket 21 that transmits rotation to the oil pump 11, to engage with the first synchronization gear 5 to which rotation generated by the electric motor 12 is transmitted. Accordingly, the first synchronization gear 5 and the hub 61 (first input sprocket 21) rotate in synchronization with each other. This makes it possible to suppress rotation generated by the electric motor 12 from being transmitted to the oil pump 11 in a decelerated state. Therefore, when driving the oil pump 11 using the electric motor 12, an increase in the rotational speed of the electric motor 12 can be suppressed, and hydraulic pressure can be generated by the oil pump 11 without using the high-performance electric motor 12.

Furthermore, when driving the oil pump 11 using the engine 14, the sleeve 62 causes the hub 61, which mates with the first input sprocket 21 that transmits rotation to the oil pump 11, to engage with the second synchronization gear 4 to which rotation generated by the engine 14 is transmitted. Accordingly, the second synchronization gear 4 and the hub 61 (first input sprocket 21) rotate in synchronization with each other. This makes it possible to suppress rotation generated by the engine 14 from being transmitted to the oil pump 11 in a decelerated state. When the rotational speed of the engine 14 is low, if the rotation of the engine 14 is transmitted to the oil pump 11 in a decelerated state, there is a possibility that the engine 14 alone cannot cause the oil pump 11 to generate the necessary hydraulic pressure. In this case, driving the electric motor 12 enables the oil pump 11 to generate the necessary hydraulic pressure, but requires consumption of electric power by the electric motor 12. On the other hand, in the present embodiment, the rotation generated by the engine 14 can be suppressed from being transmitted to the oil pump 11 in a decelerated state, and hence the occurrence of the foregoing situation and consumption of electric power can be suppressed.

The synchromesh mechanism 6 is used to cause the hub 61 (first input sprocket 21) to engage with the second synchronization gear 4 to which the rotation generated by the engine 14 is transmitted, or with the first synchronization gear 5 to which the rotation generated by the electric motor 12 is transmitted. Accordingly, smooth engagement can be achieved.

This concludes the description of the embodiment of the present invention. It should be noted that the above-described embodiment merely illustrates a part of application examples of the present invention, and is not intended to limit a technical scope of the present invention to specific configurations of the above-described embodiment.

The present application claims for priority based on Japanese Patent Application No. 2013-62498 filed with Japan Patent Office on March 25, 2013, and the entire contents of this application are incorporated in this Description by reference.

## Claims

1. An oil pump driving device for driving an oil pump using at least one of rotation generated by an electric motor and rotation generated by an engine, the oil pump driving device comprising:
a first transmission unit, the rotation generated by the electric motor being transmitted to the first transmission unit;
a second transmission unit, the rotation generated by the engine being transmitted to the second transmission unit;
a third transmission unit configured to transmit rotation to the oil pump; and
engaging means configured to cause the third transmission unit to engage with the first transmission unit, with the second transmission unit, or with the first and second transmission units.

2. The oil pump driving device according to claim 1, wherein
the engaging means is a synchromesh mechanism.

## Amended claims

### Amended claims under Art. 19.1 PCT

**1.** (Amended) An oil pump driving device for driving an oil pump using at least one of rotation generated by an electric motor and rotation generated by an engine, the oil pump driving device comprising:
a first transmission unit, the rotation generated by the electric motor being transmitted to the first transmission unit;
a second transmission unit, the rotation generated by the engine being transmitted to the second transmission unit;
a third transmission unit configured to transmit rotation to the oil pump; and
engaging means configured to cause the third transmission unit to engage with the first transmission unit, with the second transmission unit, or with the first and second transmission units, wherein
when causing the third transmission unit to engage with one of the first and second transmission units, the engaging means is configured to make the third transmission unit and the other of the first and second transmission units disengaged from each other.

**2.** The oil pump driving device according to claim 1, wherein
the engaging means is a synchromesh mechanism.

**3.** Added) The oil pump driving device according to claim 1 or 2, wherein
the engaging means is configured to perform joint switch so as to join the third transmission unit to the first transmission unit, the first and second transmission units, and the second transmission unit in a stated order, or join the third transmission unit to the second transmission unit, the first and second transmission units, and the first transmission unit in a stated order.

Statement under Art. 19.1 PCT
The claim 1 is based on the paragraphs [0030], [0041] and [0042] of the description as filed.

The claim 3 is new.

The claim 3 is based on the paragraphs [0029], [0035] and [0038] of the description as filed, and FIG.3, FIG.5 and FIG.6 of the drawings as filed.
